(19) Europäisches Patentamt

European Patent Office

Office européen des brevets

(11) EP 3 792 831 A1

(12) **EUROPEAN PATENT APPLICATION**

(43) Date of publication:
**17.03.2021 Bulletin 2021/11**

(21) Application number: **19196755.3**

(22) Date of filing: **11.09.2019**

(51) Int Cl.:
***G06N 3/04*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft 80333 München (DE)**

(72) Inventors:
• **Grimm, Stephan**
  **81825 München (DE)**
• **Hildebrandt, Marcel**
  **81737 München (DE)**
• **Joblin, Mitchell**
  **81825 München (DE)**
• **Ringsquandl, Martin**
  **83022 Rosenheim (DE)**

(54) **METHOD FOR GENERATING AN ADAPTED TASK GRAPH**

(57) The invention is directed to a computer-implemented method for generating an adapted task graph, comprising the steps Providing a first input data set with at least one task graph and at least one task context and/or a second input data set with at least one constraint and at least one task context, Generating an adapted task graph using a trained neural network based on the first input data set and/or the second input data set, and Providing the adapted task graph. Further, the invention relates to a corresponding computer program product and generating unit.

## FIG 3

**Description**

1. Technical field

The present invention relates to a computer-implemented method for generating an adapted task graph. Further, the invention relates to a corresponding computer program product and generating unit.

2. Prior art

Considering complex industrial plants, the industrial plants usually comprise distinct parts, modules or units with a multiplicity of individual functions. Exemplary units include sensors and actuators. Each unit has to fulfill or meet one or more certain functions. Thereby, the functions can be equally referred to as tasks or operations in the following. Process planning plays an important role to formally describe and analyze the complex industrial processes.

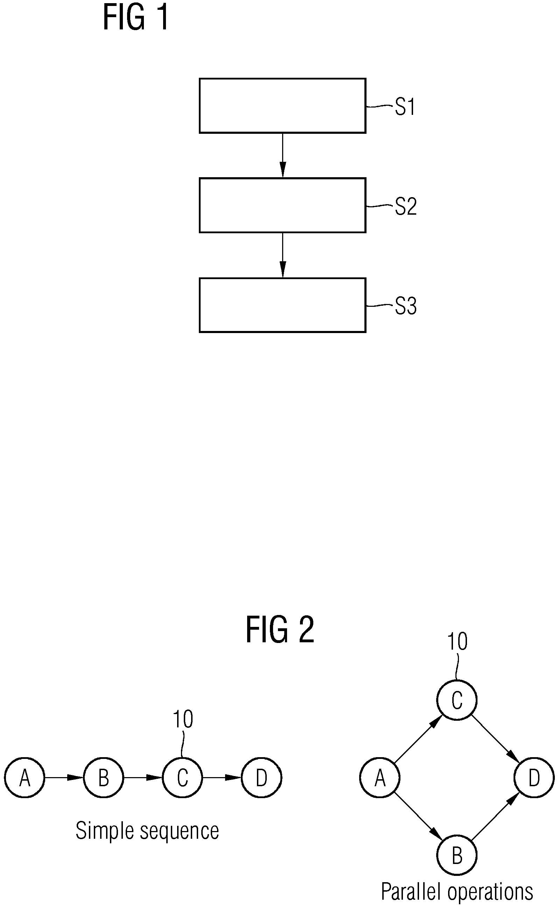

According to prior art, task graphs are usually used for process planning. Exemplary task graphs are shown in Figure 2. The task graphs comprise a sequence of operations and their dependencies. More specifically, the task graph is a graph with N nodes and respective edges. The nodes are operations and the edges are the input-output dependencies between the operations. Each operation can have multiple predecessors and successors. The graphs are usually modeled using precedence diagram methods. These diagrams are defined as directed acyclic graphs, wherein the nodes are the operations and the edges between the nodes specify their sequential or topological ordering.

Computer-aided process planning ("CAPP") is known from the prior art for storage, creation, retrieval and modification of process plans and references to products, parts and machines. The process plans can be semi-automatically generated, when there is a clear manually defined relationship between the machine operations and the design features in the Computer-aided design ("CAD") drawing.

However, these relationships can be hardly defined and are often not available. Thus, the availability of the relationships is insufficient. In this case, the experts have to manually go through documentations of existing process plans and communicate with the product engineers to find similarities. This often requires inefficient visual inspection of the technical drawings.

The disadvantage of the manual approach is that it relies on domain expertise and thus expert knowledge. The manual approach is cost intensive, time-consuming and error-prone.

It is therefore an objective of the invention to provide a computer-implemented method for generating an adapted task graph in an efficient and reliable manner.

3. Summary of the invention

This problem is according to one aspect of the invention solved by computer-implemented method for generating an adapted task graph, comprising the steps:

　　a. Providing a first input data set with at least one initial task graph and at least one task context and/or a second input data set with at least one constraint and at least one task context,

　　b. Generating an adapted task graph using a trained neural network based on the first input data set and/or the second input data set, and

　　c. Providing the adapted task graph.

Accordingly, the invention is directed to a computer-implemented method for generating an adapted task graph. In other words, incomplete or partial task graphs as initial task graphs from empty to almost complete are adapted. For example, one or more nodes or edges can be added to the initial task graph or removed from the initial task graph. Thus, the adaptation includes extension and deletion.

An operation is a single activity, task or function, defining e.g.

　　a) What is the output i.e. product part,
　　b) all necessary inputs i.e. other product parts, raw material,
　　c) The type of operation i.e. how input should be processed, transforming or assembling the inputs into the output,
　　d) which tools to use i.e. machines,
　　e) How long it should take i.e. processing time.

In a first step at least one input data set is received. The first and second input data sets are different.

The first input data set comprises the initial task graph and at least one task context. The task context is information which is required to design the task graph in such a manner that the task graph delivers the desired output. The output is the adapted task graph, which can be used to generate the product. The task context can comprise drawings of the product to be produced e.g. CAD, software diagrams and architectural drawings, bill of materials, structured text requirements, unstructured text requirements, specification of hard constraints, soft constraints of operation dependencies e.g. existing rules, best practices.

The second input data set comprises at least one constraint and at least one task context. The constraints are e.g. hard constraints and/or soft constraints.

In a next step the adapted task graph is determined using a trained neural network based on the first input data set and/or the second input data set. Thus, the distinct input data sets can be processed by one common trained neural network.

Therefore, a trained machine learning model is applied using machine learning during throughput.

To the contrary, in the training phase, a set of independent input data sets is used as training data set to train the machine learning model. The machine learning model is a graph convolutional network in a preferred embodiment.

Thus, in other words, the machine learning model is untrained and used in the training process with a training input data set, whereas the trained machine learning model is used after training in the running system or for the method according to the invention.

The method according to the invention ensures an improved efficiency and accuracy in determining the adapted task graph. The adapted task graph and in the end the product is more reliable compared to prior art.

Considering autonomous driving and the according autonomous cars as final product solutions, the safety of the operator and car can be significantly increased. Accidents can be prevented from the very beginning taking the operator's needs into account. For example, the generated task graph can be used to generate the autonomous car taking the customer's needs into account. Another example is directed to the incorporation of the generated task graph into the algorithm or software of the autonomous car.

More precisely, the advantage is that the method enables the complementation or completion of task graphs in an efficient and reliable manner. The disadvantages of the expensive and time-consuming specification of task graphs solely based on expert knowledge and market research according to prior art can be overcome.

Exemplary applications are bill of process generation and Computational graph generation.

Bill of Process Generation:

Usually production plants have historical data about executed tasks on different machines, which together form a task graph. These task graphs are also called "Bill of Processes". The method according to the invention can be used for generating new Bill of Processes for new products. For example, a task graph can be generated which produces the given product with the smallest amount of resources needed.

Computational Graph Generation:

Many software systems work on graph-based abstractions to schedule operations. For example, data processing pipelines are made more efficient when all the dependencies between operations are specified in such a manner that they can be executed in parallel. Given a data processing problem, the method according to the invention can be used for generating a corresponding and preferably optimal task graph with respect to an optimization factor e.g. achieve lowest processing time.

In one aspect the task graph is a typed task graph. The typed task graph (TTG) is a directed acyclic graph G = <V, E, L> where V is a set of operation nodes, E is a set of ordered pairs of nodes and l:V -> 0 maps vertices to a finite set of operation types (labels). The cardinality of the set of vertices should cover all the operations with $|V| = N$. The typed task graph has proven to be advantageous in view of the dependencies between the operations and allows for flexibility.

In another aspect the neural network is a graph convolutional network. The graph convolutional network has proven to be advantageous since the network can gather structural information of the task graph and can handle a variable number of nodes.

In another aspect, the method comprises the further steps

- Determining an evaluated adapted task graph, wherein the evaluation depends on the input data set, and
- Providing the evaluated adapted task graph. Accordingly, the adapted task graph is evaluated before being provided. The evaluation ensures that only reliable adapted task graphs are outputted and used for any subsequent applications.

In another aspect the evaluation comprises the step of

- Evaluating the adapted task graph by using a trained discriminator network based on the first input data set or

- Evaluating the adapted task graph by checking the at least one constraint based on the second input data set.

A further aspect of the invention is a computer program product directly loadable into an internal memory of a computer, comprising software code portions for performing the steps according to the aforementioned method when said computer program product is running on a computer.

A further aspect of the invention is a generating unit for performing the aforementioned method.

The unit may be realized as any device, or any means, for computing, in particular for executing a software, an app, or an algorithm. For example, the generating unit may consist of or comprise a central processing unit (CPU) and/or a memory operatively connected to the CPU. The unit may also comprise an array of CPUs, an array of graphical processing units (GPUs), at least one application-specific integrated circuit (ASIC), at least one field-programmable gate array, or any combination of the foregoing. The unit may comprise at least one module which in turn may comprise software and/or hardware. Some, or even all, modules of the units may be implemented by a cloud computing platform.

4. Short description of the drawings

In the following detailed description, presently preferred embodiments of the invention are further described with reference to the following figures:

Fig. 1     illustrates a flowchart of the method according to the invention.

Fig. 2     illustrates distinct exemplary task graphs according to an embodiment of the invention.

Fig. 3     illustrates the graph convolutional policy network according to an embodiment of the invention.

Fig. 4     illustrates the discriminator network according to an embodiment of the invention.

Fig. 5     illustrates the training phase according to an embodiment of the invention.

5. Detailed description of preferred embodiments

Fig. 1 illustrates a flowchart of the method according to the invention. The method for generating an adapted task graph 10 comprises the following steps

a. Providing a first input data set with at least one initial task graph 10 and at least one task context and/or a second input data set with at least one constraint and at least one task context S1,

b. Generating an adapted task graph 10 using a trained neural network based on the first input data set and/or the second input data set S2, and

c. Providing the adapted task graph 10, S3.

In other words, the adapted task graph 10 can be automatically generated using a reinforcement learning-based approach based on distinct input data sets. Thus, the method can be flexibly applied on distinct environments. Exemplary task graphs 10 are depicted in Figure 2 for illustration purposes.

The generation of a typed task graph ("TTG") is modeled as an episodic Markov Decision Process ("MDP") from which trajectories can be obtained. A trajectory or episode is a sequence of triples ($< s_1, a_1, r_1 >$, ..., $< s_t, a_t, r_t >$, ..., $< s_T, a_T, r_T >$) where s is a state, a is an action, r is a reward, at time t until the end of an episode T.

State space $s_t$ is a tuple: $<$ process context *TC*, the TTG at time t: $G_t >$

Action space $A_t$: $\{(i, j) \mid i, j \in V_t, (i, j) \notin E_t\} \cup \{(i, j') \mid i \in V_t, j' \notin V_t, l(j') \in 0\}$

The initial state is:

$$S_0 = < PC, G_0 >,$$

Where $G_0$ is the empty TTG or empty DAG.

This means that the agent can iteratively either add edges between existing operation nodes in the complete or partial process plan or add a new node $j'$ with a certain operation type.

Policy learning:

The approach considers reinforcement learning to obtain a policy $\pi^\theta = P[a \mid s]$, which is a function parameterized by $\theta$ that defines a probability distribution over all possible actions in $A_t$ given a state $S_t$.

Environments:

1) Example based

Input: Database of pairs (context, task graph)
The reward is purely given by how well the generate TTG matches existing or known examples of valid TTGs.
Goal: Create a TTG that maximizes the similarity to existing TTGs given TC **(Obj 1)**

2) Constraint-based

Input: Functions of hard and soft constraints $F_{hard} : S_t \to \{True, False\}$, $F_{soft} : S_t \to \mathbb{R}$
The reward is given by solving or minimizing the number of violated constraints.
Goal: Create a TTG that minimizes violated constraints given TC **(Obj 2)**

3) Combination of 1) and 2)

Input: triples of context, example task graphs, and constraints
Reward is a weighted combination of **Obj 1** and **Obj 2**
Goal: Create a TTG that both maximizes similarity to existing TTCs by also minimizing violated constraints given TC

Other reward assignments can be plugged into the objective in all environments, i.e. any function that takes a task graph as input and assigns a value to it. For example, process simulation software may be used to evaluate the efficiency of a task graph.

The output in all cases is an agent with a policy $\pi^\theta$ conditioned on **TC**.

Graph convolutional policy network according

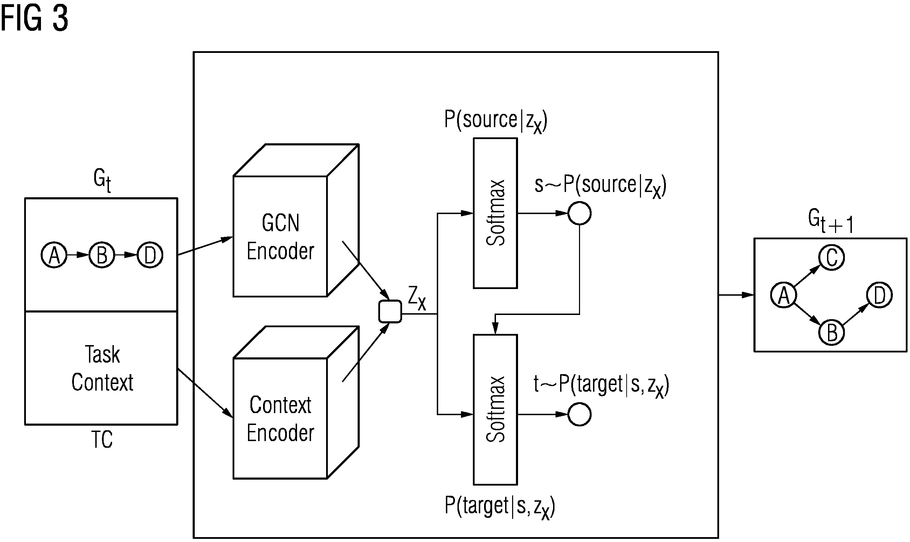

Figure 3 illustrates the graph convolutional network where an exemplary set of operation types is given as $O = \{A, B, C, D\}$. The graph convolutional network iteratively takes the current state $< TC, G_t >$ as input. This input is encoded into a continuous vector $z_x$ using some form of graph neural network e.g. graph convolutional network and a process context encoder, which may also be a graph convolutional network. The graph convolutional network further employs two function approximators with a Softmax activation representing a factorized probability distribution over the action space $A_t$. The first action distribution models the probability of picking the source node $s$ for the extension of the current TTG. The second action distribution models the conditional probability of picking target node $t$ and therefore placing an edge between $s$ and $t$ to extend the current TTG. As last step, $s$ and $t$ are sampled according to the output of the action distributions, resulting in the next state $G_{t+1}$.

Discriminator network

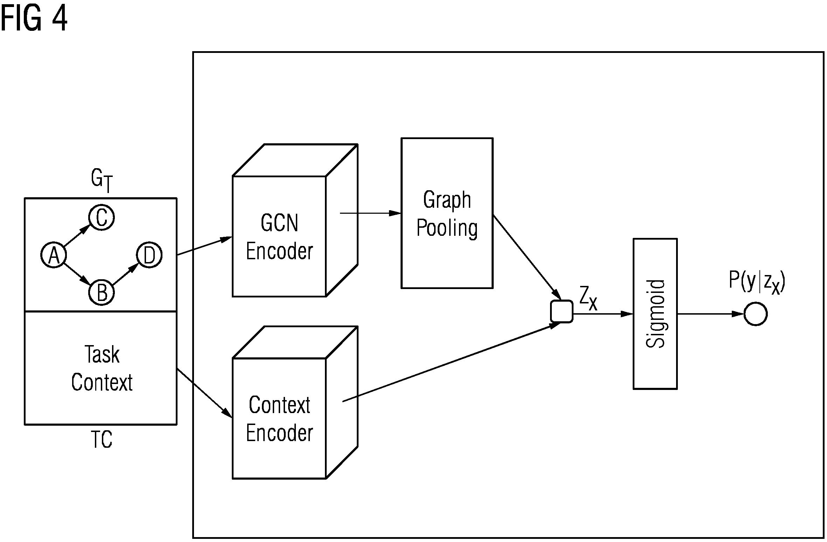

Figure 4 illustrates the discriminator network which can be trained in parallel to the graph convolutional network with the goal to learn how to discriminate generated process plans from real ones e.g. actual example database of process plans.

The discriminator is a parameterized function $d^w: G \to Y$, where $Y = \{True, False\}$. In case of a linear $d^w$ the discriminator becomes a logistic regression model:

$$p(y = True \mid G) = 1/ (1 + e^{-w \cdot xG})$$

where $x_G$ is some feature representation of a TTG $G$, and $w$ is the linear model parameter vector.

Given a dataset of actual (True) and artificially generated (False) DAGs: $\{(x_{G1}, \textit{True}), (x_{G2}, \textit{False}), ... \}$ the discriminator model can be fitted to this data in a maximum-likelihood setting.

The generator's policy model $\pi^\theta$ iteratively builds up TTGs $G_t$ by sampling actions given states and gets a reward proportional to the likelihood of fooling the discriminator, e.g. the final reward $r_T \approx p(y = \textit{True} \mid G_T)$. The network's objective function is to maximize the expected total reward which means it has to generate examples that are indistinguishable from actual examples for the discriminator.

Instead of a linear model, a more complex discriminative model is preferable to effectively encode both task context and the task graph. In a preferred embodiment, a graph convolutional network encoder is used, since making the discriminator equally flexible as the network leads to better balancing during training. Given a pair of $< \textbf{\textit{TC}}, \textbf{\textit{G}}_t >$ the encoder constructs node embeddings which are condensed into a single vector using a graph pooling operation e.g. sum, average, max and concatenates the context embedding to the graph pooled one, resulting in $z_x$. This combined vector representation of task context and graph is then fed into a fully-connected layer with a Sigmoid activation i.e. binary classifier that models the probability of this pair being an actual example of a generated one.

## Training phase

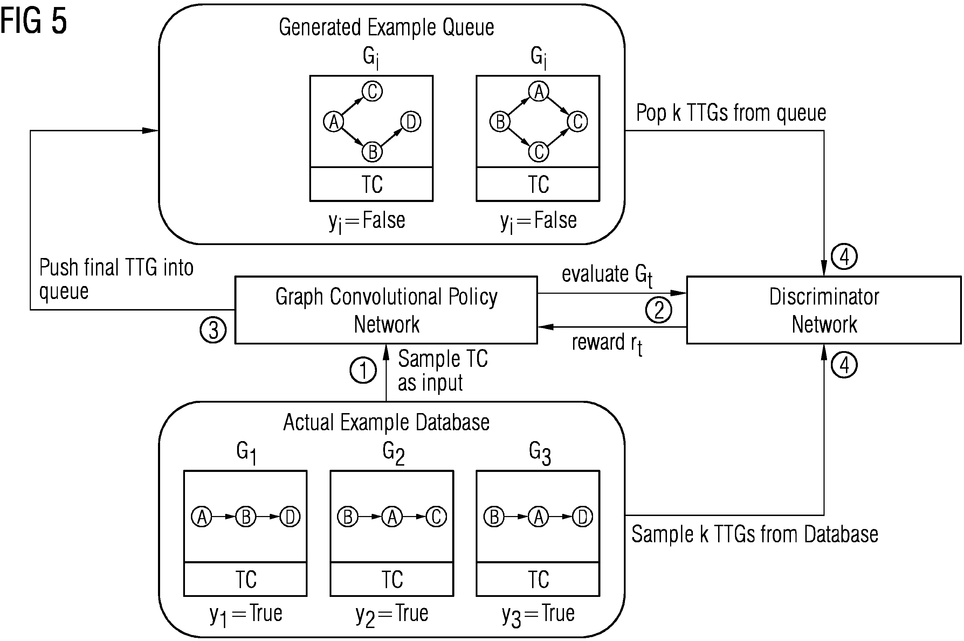

The training process is illustrated in Figure 5, according to which the training process comprises the following steps:

1) Initializing the generation with a sampled task context from existing examples
2) Iteratively growing and getting reward for the current TTG from the discriminator and adapting the policy
3) Pushing the final TTG into an example queue
4) Training the discriminator network on batches of k actual and k generated examples
5) Repeating the aforementioned steps until convergence of parameters

## Reference signs

S1 to S3    Method steps 1 to 3
10          task graph

## Claims

1. Computer-implemented method for generating an adapted task graph (10), comprising the steps:

   a. Providing a first input data set with at least one initial task graph (10) and at least one task context and/or a second input data set with at least one constraint and at least one task context (S1),
   b. Generating an adapted task graph (10) using a trained neural network based on the first input data set and/or the second input data set (S2), and
   c. Providing the adapted task graph (10, S3).

2. Computer-implemented method according to claim 1,
   wherein the task graph is a typed task graph.

3. Computer-implemented method according to claim 1 or claim 2, wherein the neural network is a graph convolutional network.

4. Computer-implemented method according to any of the preceding claims, wherein the method further comprises the steps

   - Determining an evaluated adapted task graph, wherein the evaluation depends on the input data set, and
   - Providing the evaluated adapted task graph.

5. Computer-implemented method according to claim 4,
   wherein the evaluation comprises the step of

- Evaluating the adapted task graph by using a trained discriminator network based on the first input data set or
- Evaluating the adapted task graph by checking the at least one constraint based on the second input data set.

6. A computer program product directly loadable into an internal memory of a computer, comprising software code portions for performing the steps according to any one of the preceding claims when said computer program product is running on a computer.

7. Generating unit for performing the steps according to any one of the preceding claims.

## FIG 1

## FIG 2

Simple sequence

Parallel operations

FIG 3

$G_t$

$G_{t+1}$

TC

Task Context

GCN Encoder

Context Encoder

$Z_X$

$P(source|z_X)$

Softmax

$s \sim P(source|z_X)$

$P(target|s, z_X)$

Softmax

$t \sim P(target|s, z_X)$

EP 3 792 831 A1

FIG 4

# FIG 5

# EUROPEAN SEARCH REPORT

Application Number

EP 19 19 6755

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALEKSANDAR BOJCHEVSKI ET AL: "NetGAN: Generating Graphs via Random Walks", ARXIV.ORG, CORNELL UNIVERSITY LIBRARY, 201 OLIN LIBRARY CORNELL UNIVERSITY ITHACA, NY 14853, 2 March 2018 (2018-03-02), XP081236020, | 1,2,4-7 | INV. G06N3/04 |
| Y | * pages 1-8 * <br> * pages 11-16 * | 3 | |
| X | ZONGHAN WU ET AL: "A Comprehensive Survey on Graph Neural Networks", ARXIV.ORG, CORNELL UNIVERSITY LIBRARY, 201 OLIN LIBRARY CORNELL UNIVERSITY ITHACA, NY 14853, 3 January 2019 (2019-01-03), XP081124767, | 1,6,7 | |
| Y | * the whole document * | 3 | |
| A | | 2,4,5 | |
| X | YUJIA LI ET AL: "Learning Deep Generative Models of Graphs", ARXIV.ORG, CORNELL UNIVERSITY LIBRARY, 201 OLIN LIBRARY CORNELL UNIVERSITY ITHACA, NY 14853, 8 March 2018 (2018-03-08), XP080862937, | 1,6,7 | TECHNICAL FIELDS SEARCHED (IPC) <br><br> G06N |
| A | * pages 1-9 * <br> * pages 11-21 * | 2-5 | |
| X | WO 2019/081781 A1 (DEEPMIND TECH LIMITED [GB]) 2 May 2019 (2019-05-02) | 1,6,7 | |
| A | * abstract; claims 1-47; figures 1-6 * <br> * pages 2-26 * | 2-5 | |

-/--

The present search report has been drawn up for all claims

| Place of search | Date of completion of the search | Examiner |
|---|---|---|
| The Hague | 2 March 2020 | Volkmer, Markus |

EPO FORM 1503 03.82 (P04C01)

Europäisches
Patentamt

European
Patent Office

Office européen
des brevets

## EUROPEAN SEARCH REPORT

Application Number

EP 19 19 6755

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JIANG WAN ET AL: "Future Automation Engineering using Structural Graph Convolutional Neural Networks", ARXIV.ORG, CORNELL UNIVERSITY LIBRARY, 201 OLIN LIBRARY CORNELL UNIVERSITY ITHACA, NY 14853, 24 August 2018 (2018-08-24), XP081265835, DOI: 10.1145/3240765.3243477 * page 1 - page 8, right-hand column, paragraph 1 * | 1-7 | |
| A | TINGWU WANG ET AL: "NERVENET: LEARNING STRUCTURED POLICY WITH GRAPH NEURAL NETWORKS", 6TH INTERNATIONAL CONFERENCE ON LEARNING REPRESENTATIONS (ICLR 2018), 10 March 2018 (2018-03-10), pages 1-26, XP055604877, Vancouver Convention Center, Vancouver, BC, Canada * page 1 - page 15, last paragraph * * APPENDIX * | 1-7 | |
| A | WO 2019/151984 A1 (GOOGLE LLC [US]) 8 August 2019 (2019-08-08) * abstract; claims 1-14; figures 1,2,4 * * pages 1-15 * * pages 19-20 * | 1-7 | TECHNICAL FIELDS SEARCHED (IPC) |

The present search report has been drawn up for all claims

| Place of search | Date of completion of the search | Examiner |
|---|---|---|
| The Hague | 2 March 2020 | Volkmer, Markus |

EPO FORM 1503 03.82 (P04C01)

page 2 of 2

**EP 3 792 831 A1**

## ANNEX TO THE EUROPEAN SEARCH REPORT
## ON EUROPEAN PATENT APPLICATION NO.

EP 19 19 6755

02-03-2020

| Patent document cited in search report | | Publication date | Patent family member(s) | Publication date |
|---|---|---|---|---|
| WO 2019081781 | A1 | 02-05-2019 | NONE | |
| WO 2019151984 | A1 | 08-08-2019 | NONE | |

EPO FORM P0459

For more details about this annex : see Official Journal of the European Patent Office, No. 12/82